# EUROPEAN PATENT SPECIFICATION

(11) **EP 0 846 542 B1**
(45) Date of publication and mention of the grant of the patent: **19.03.2003**
(21) Application number: 96890181.9
(22) Date of filing: 04.12.1996
(51) Int. Cl.: B29C 45/73

(54) **Method of and apparatus for injection moulding a plastic substrate using a plurality of separate temperature adjusting means**
Verfahren und Vorrichtung zum Spritzgiessen eines Kunststoffsubstrates unter Verwendung mehrerer separater Temperatureinstellungsmittel
Procédé et dispositif de moulage par injection d'un substrate en matière plastique utilisant une pluralité de moyens séparés de réglage de température

(43) Date of publication of application: 10.06.1998
(73) Proprietor: Sony DADC Austria AG, 5081 Anif (AT)
(72) Inventor: Peterca, Andrej, 5431 Kuchl (AT)
(74) Representative: Kliment, Peter, Dipl.-Ing.

(56) References cited:
- EP-A- 0 122 207
- CH-A- 507 802
- DE-A- 4 418 452
- GB-A- 1 209 155
- US-A- 3 191 225
- US-A- 4 437 641
- PATENT ABSTRACTS OF JAPAN vol. 8, no. 80 (M-289) [1517] , 12 April 1984 & JP 58 224730 A (PIONEER KK), 27 December 1983,
- PATENT ABSTRACTS OF JAPAN vol. 13, no. 528 (M-898) [3876] , 24 November 1989 & JP 01 216807 A (TOSHIBA CORP), 30 August 1989,
- PATENT ABSTRACTS OF JAPAN vol. 18, no. 496 (M-1674), 16 September 1994 & JP 06 166076 A (HITACHI MAXELL LTD), 14 June 1994,
- PATENT ABSTRACTS OF JAPAN vol. 96, no. 4, 30 April 1996 & JP 07 329137 A (MITSUBISHI CHEM CORP), 19 December 1995,

## Description

The invention relates to a method of and apparatus for molding a substrate in a mold and more specifically to a method of and apparatus for molding with multiple temperature adjusting channels to enable production more efficiently.

In a process of producing plastics, hot molten raw material is injected through an injection nozzle and a sprue channel or extension gate and/or a runner channel into the cavity formed by the closed mold. After the molded plastics is cooled down, the mold is opened and the molded plastics is removed or unloaded from the mold.

In general, such molded plastics is apt to have outward defects such as a weld line and/or shrink near the gate. Also distortion may be caused within the molded plastics because of injection pressure, lack of temperature distribution uniformity, and molecules orientations caused while the molten material flows in the cavity.

In case of production of substrate of optical disc, the quality of an optical disc is defined by the geometrical dimensions as well as its optical characteristics such as refraction index or birefringence. One of the geometrical dimensions is determined by the quality of the inverse replication of the stamper and which has the order of about 100nm. The optical quality is mainly determined by prevailing orientations of the molecules of the injected material and by the stress frozen in the molded material.

In order to achieve good quality in geometric dimensions and optical characteristics of the optical disc, therefore, it is necessary to inject the material with a temperature at which the material is plasticized as enough as possible and not to inject the material below 300°C. On the other hand, it is necessary to cool down the material below its glass temperature (below 140°C) to avoid deformation during unload of the mold. The time period from when the molten material is injected to when the molded substrate can be removed is defined as the cooling time. In order to reduce the cooling time, it is necessary to increase the cooling rate.

In general, however, the faster the material is cooled down (the cooling rate), the more prevailing orientations and stress caused during the injection are frozen in the molded material.

As conventional mold has an equal temperature distribution along the geometry, the injected molten material is earlier cooled down in the outer radius of the cavity than near the gate so that a temperature difference is caused between the outer radius of the cavity and near the gate. If the cooling rate is very high, the temperature of the injected material decreases with this temperature gradient and this leads the molded optical disc to an inhomogeneous distribution of the frozen prevailing orientations and the remaining stress from the inner to the outer in the direction of the radius of the disc.

It is known to heat the cavity over the melting point of the injected material before and during injection and then cooling the cavity after injection. However, in the case of injection molding, the production cycle time is mainly determined by the cooling time which is about 50% of the production cycle time. Therefore, this known process makes the production cycle time longer, because it is not possible to switch from heating to cooling within a few seconds.

It is further known to provide fluid channels as temperature adjusting means which are used to provide a uniform temperature profile along the outer periphery of the optical disc.

JP 58 224730 A as well as JP 01 216807 A disclose apparatuses for injection molding of optical discs where fluid channels are provided to obtain the said well defined temperature profile along the outer periphery of the optical disc. However especially the radial outer region of the substrate is very sensitive concerning temperature adjustments. It is therefore necessary to have a temperature controlling means which can be controlled very quickly. However the known fluid channels react rather inert.

According to the invention this problem is solved by a method or apparatus which provides that adjusting the temperature of the outer regions of the substrate is performed with an electrical heater which helps providing a defined temperature profile of the mold along the material flow within the cavity. This allows to reduce the cooling time during injection molding process with the consequence of shorter production cycle times without deteriorating the quality of the molded products and with a very short response time of the temperature adjusting means.

The invention will now be described by way of examples and with reference to the accompanying drawings in which:
Fig. 1 is a schematic drawing showing a sectional view of a part of an injection molding machine in accordance with the invention.
Figs. 2 is a schematic drawing showing a sectional view of the mirror of the injection molding machine shown in Fig. 1.

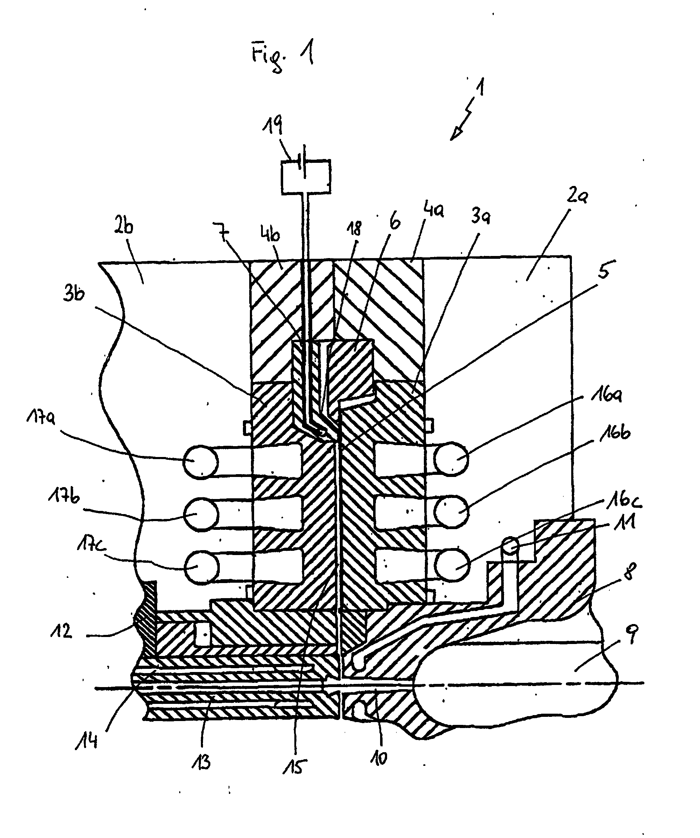

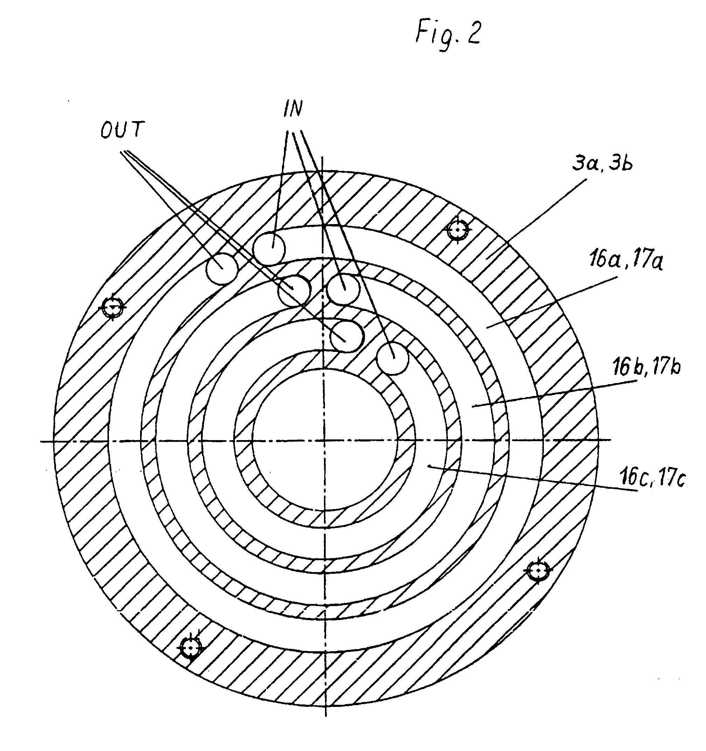

Referring to Figs. 1 and 2, an embodiment of the injection molding machine 1 in accordance with the invention is explained. In this embodiment, the injection molding machine 1 is designed for production of plastic substrates of optical discs such as compact discs.

The injection molding machine 1 includes the stationary die plate 2a on the right side and the movable die plate 2b on the left side. The stationary die plate 2a is attached with the stationary mirror 3a and the spacer 4a. The stamper 5 is mounted on the stationary mirror 3a by means of the stamper ring 6 attached on the spacer 4a. The movable die plate 2b is attached with the movable mirror 3b which is also called as a mirror stamper and the spacer 4b. The spacer 4b is attached with the outer mirror ring 7 by which the diameter of the substrate to be molded is defined.

The stationary die plate 2a is further provided with the sprue bush 8 in which the nozzle 9, the sprue channel 10 and the cooling channel 11 are formed. The movable die plate 2b is further provided with the center bush 12 in which the bunch 13 and the cooling channel 14 is contained. The sprue bush 8 and the center bush 12 takes place at the center of the mirrors 3a and 3b due to the rotational symmetry of the substrate. Fig. 1 shows only upper half of the molds.

At the beginning of every injection cycle, the movable die plate 2b is moved toward the stationary die plate 2a so that the two mirrors 3a and 3b are closed together with the outer mirror ring 7 to form a cavity 15 corresponding the shape of the substrate.

The molten and plasticized material is injected into the cavity 15 through the nozzle 9, the sprue channel 10 and the gate provided between the sprue channel 10 and the cavity 15. The injected material flows toward the outer radius of the cavity 15 along the mirror stamper 3b and the stamper 5 from which the data information are replicated on the substrate.

During the production, water of 20 to 30°C flows through the channel 11 in the sprue channel region and through the channel 14 in the bunch region.

In this embodiment, the separate, for example three, independent channels 16a, 16b, and 16c are provided to the stationary mirror 3a. Similarly, the separate, for example three, independent channels 17a, 17b, and 17c are provided to the movable mirror 3b. The course of the channels 16a, 16b, and 16c as well as the channels 17a, 17b, and 17c are formed for example concentric circles respectively as shown in Fig. 2. These channels 16a, 16b, 16c, 17a, 17b and 17c are supplied with medium like a fluid such as water or gas of different temperatures flowing therethrough,

The temperature conditions of the fluid supplied through the channels 16a. 16b, and 16c as well as the channels 17a, 17b, and 17c are adjusted so that the cooling time can be minimized. The temperature profile of the fluid are, for example, 85°C, 80°C and 80°C in the channels 16a, 16b, and 16c. respectively and 50°C. 80°C and 80°C, in the channels 17a, 17b, and 17 c, respectively. The above temperatures of the fluid are measured near the channels 16a, 16b, 16c, 17a, 17b, and 17c, respectively.

Furthermore, the outer mirror ring 7 is provided with a groove 18 where an electric ring heater 19 is provided to maintain the outer region of the substrate at 80°C, for instance. This groove 18 can be replaced with a channel through which a medium like heated water flows.

After the molded substrate is cooled down, the mold is opened and the molded substrate is removed from the movable mirror 3b.

According to the above described temperature profile, the cooling time can be reduced from 7 seconds to 5 seconds, for example. The above temperature profile can be modified according to the other conditions of the production.

The invention can be applied to production of optical components such as optical lens. However, it is also possible to apply this invention to any other types of molding machines or methods or any other products than the above embodiment.

The shape of each channel 17a to 17c and 17a to 17c is not limited to the concentric circle and also possible to be concentric square or any other form.

## Claims

1. A method of molding a plastic substrate in a mold comprising the steps of: closing the mold (3a, 3b 5, and 7) to form a cavity (15) ; injecting molten material into the cavity (15); cooling the injected material, by a plurality of separate temperature adjusting means (16a, 16b, 16c, 17a, 17b, 17c) having different temperatures to obtain a well defined temperature profile, opening the mold; removing the molded plastic from the mold; **characterized in that** the method includes heating the radial outer region of the substrate by an electric heater (19).

2. A method of molding a plastic as claimed in Claim 1, **characterized in that** the temperature of the temperature adjusting means in the radial outer region of the cavity is . higher than in the radial inner region of the cavity in one half of the mold and the temperature of the temperature adjusting means in the outer radius of the cavity is lower than in the inner radius of the cavity in the other half of the mold.

3. A method of molding a plastic as claimed in Claim 1, **characterized in that** said step of adjusting the temperature of the molten material includes cooling the molten material by a plurality of separate temperature adjusting means (16a, 16b and 16c) provided in the radial direction of one half of the mold and the plurality of separate temperature adjusting means (17a, 17b and 17c) and additional temperature adjusting means (19) provided in the radial direction in the other half of the mold and the temperature of the temperature adjusting means (16a) in the outer radius of the cavity is higher than the temperature of the temperature adjusting means (16b and 16c) in the inner radius of the cavity in the one half of the mold and the temperature of the temperature adjusting means (17a) in the outer radius of the cavity is lower than the temperature of the temperature adjusting means (17b and 17c) in the inner radius of the cavity in the other half of the mold and the temperature of the additional temperature adjusting means is also higher than the temperature of the temperature adjusting means (17a) in the outer radius of the cavity in the other hald of the mold.

4. An apparatus for molding a plastic substrate comprising: mold means (3a, 3b, 5, 7) forming a cavity (15); injection means (9, 10) for injecting the molten material into the cavity (15); a plurality of separate temperature adjusting means having different temperatures (16a, 16b, 16c, 17a, 17b, 17c) for cooling the injected material, **characterized in that** at least one additional electric heater (19) is provided for heating the radial outer region of the cavity namely the outer mirror ring.

5. An apparatus for molding a plastic as claimed in Claim 4, **characterized in that** the temperature of the temperature adjusting means (16a) in the outer radius of the cavity is higher than in the inner radius of the cavity in one half of the mold and the temperature of the temperature adjusting means (17a) in the outer radius of the cavity is lower than in the inner radius of the cavity in the other half of the mold.

6. An apparatus for molding a plastic as claimed in Claim 4, **characterized in that** said temperature adjusting means include a plurality of separate temperature adjusting means (16a, 16b and 16c) provided in the radial direction of one half of the mold and the plurality of separate temperature adjusting means (17a, 17b and 17c) and additional temperature adjusting means (19) provided in the radial direction in the other half of the mold and the temperature of the temperature adjusting means (16a) in the outer radius of the cavity is higher than the temperature of the temperature adjusting means (16b and 16c) in the inner radius of the cavity in the one half of the mold and the temperature of the temperature adjusting means (17a) in the outer radius of the cavity is lower than the temperature of the temperature adjusting means (17b and 17c) in the inner radius of the cavity in the other half of the mold and the temperature of the additional temperature adjusting means is also higher than the temperature of the temperature adjusting means (17a) in the outer radius of the cavity in the other half of the mold.

## Patentansprüche

1. Verfahren zum Guß eines Kunststoffträgers in einer Form, das die folgenden Schritte umfaßt: Schließen der Form (3a, 3b, 6 und 7), um einen Hohlraum (15) zu bilden; Spritzen von geschmolzenem Material in den Hohlraum (15); Abkühlen des eingespritzten Materials mittels einer Mehrzahl gesonderter Temperatureinstellmittel (16a, 16b, 16c, 17a, 17b, 17c), die verschiedene Temperaturen aufweisen, um ein wohldefiniertes Temperaturprofil zu erhalten; Öffnen der Form; Entnahme des spritzgegossenen Kunststoffs aus der Form; **dadurch gekennzeichnet, daß** das Verfahren das Erwärmen des radialen äußeren Bereichs des Trägers mittels einer elektrischen Heizvorrichtung (19) einschließt.

2. Verfahren zum Guß eines Kunststoffs nach Anspruch 1, **dadurch gekennzeichnet, daß** in einer Hälfte der Form die Temperatur der Temperatureinstellmittel in dem radialen äußeren Bereich des Hohlraums höher ist als in dem radialen inneren Bereich des Hohlraums und in der anderen Hälfte der Form die Temperatur der Temperatureinstellmittel in dem äußeren Radius des Hohlraums niedriger ist als in dem inneren Radius des Hohlraums.

3. Verfahren zum Guß eines Kunststoffs nach Anspruch 1, **dadurch gekennzeichnet, daß** der Schritt der Temperatureinstellung des geschmolzenen Materials das Abkühlen des geschmolzenen Materials mittels einer Mehrzahl gesonderter Temperatureinstellmittel (16a, 16b und 16c), die in der radialen Richtung einer Hälfte der Form vorgesehen sind, und der Mehrzahl gesonderter Temperatureinstellmittel (17a, 17b und 17c) und zusätzlicher Temperatureinstellmittel (19), die in der radialen Richtung in der anderen Hälfte der Form vorgesehen sind, einschließt und daß in der einen Hälfte der Form die Temperatur der Temperatureinstellmittel (16a) in dem äußeren Radius des Hohlraums höher ist als die Temperatur der Temperatureinstellmittel (16b und 16c) in dem inneren Radius des Hohlraums und in der anderen Hälfte der Form die Temperatur der Temperatureinstellmittel (17a) in dem äußeren Radius des Hohlraums niedriger ist als die Temperatur der Temperatureinstellmittel (17b und 17c) in dem inneren Radius des Hohlraums und in der anderen Hälfte der Form die Temperatur der zusätzlichen Temperatureinstellmittel ebenfalls höher ist als die Temperatur der Temperatureinstellmittel (17a) in dem äußeren Radius des Hohlraums.

4. Vorrichtung zum Guß eines Kunststoffträgers, umfassend: Formmittel (3a, 3b, 5, 7), die einen Hohlraum (15) bilden; Spritzmittel (9, 10) zum Spritzen des geschmolzenen Materials in den Hohlraum (15); eine Mehrzahl gesonderter Temperatureinstellmittel mit verschiedenen Temperaturen (16a, 16b, 16c, 17a, 17b, 17c) zum Abkühlen des eingespritzten Materials, **dadurch gekennzeichnet, daß** wenigstens eine zusätzliche elektrische Heizvorrichtung (19) zum Erwärmen des radialen äußeren Bereichs des Hohlraums, nämlich des äußeren Spiegelrings, vorgesehen ist.

5. Vorrichtung zum Guß eines Kunststoffs nach Anspruch 4, **dadurch gekennzeichnet, daß** in einer Hälfte der Form die Temperatur der Temperatureinstellmittel (16a) in dem äußeren Radius des Hohlraums höher ist als in dem inneren Radius des Hohlraums und in der anderen Hälfte der Form die Temperatur der Temperatureinstellmittel (17a) in dem äußeren Radius des Hohlraums niedriger ist als in dem inneren Radius des Hohlraums.

6. Vorrichtung zum Guß eines Kunststoffs nach Anspruch 4, **dadurch gekennzeichnet, daß** die genannten Temperatureinstellmittel eine Mehrzahl gesonderter Temperatureinstellmittel (16a, 16b und 16c), die in der radialen Richtung einer Hälfte der Form vorgesehen sind, und die Mehrzahl gesonderter Temperatureinstellmittel (17a, 17b und 17c) und zusätzliche Temperatureinstellmittel (19), die in der radialen Richtung in der anderen Hälfte der Form vorgesehen sind, umfassen und in der einen Hälfte der Form die Temperatur der Temperatureinstellmittel (16a) in dem äußeren Radius des Hohlraums höher ist als die Temperatur der Temperatureinstellmittel (16b und 16c) in dem inneren Radius des Hohlraums und in der anderen Hälfte der Form die Temperatur der Temperatureinstellmittel (17a) in dem äußeren Radius des Hohlraums niedriger ist als die Temperatur der Temperatureinstellmittel (17b und 17c) in dem inneren Radius des Hohlraums und in der anderen Hälfte der Form die Temperatur der zusätzlichen Temperatureinstellmittel ebenfalls höher ist als die Temperatur der Temperatureinstellmittel (17a) in dem äußeren Radius des Hohlraums.

## Revendications

1. Procédé de moulage d'un substrat en matière plastique dans un moule comprenant les étapes suivantes : fermer le moule (3a, 3b, 5 et 7) pour former une cavité (15) ; injecter le matériau en fusion dans la cavité (15) ; refroidir le matériau injecté par une pluralité de moyens de réglage de la température distincts (16a, 16b, 16c, 17a, 17b, 17c) ayant des températures différentes pour obtenir un profil de température bien défini, ouvrir le moule ; retirer la matière plastique moulée du moule ; **caractérisé en ce que** le procédé prévoit de chauffer la zone radiale externe du substrat au moyen d'un élément chauffant électrique (19).

2. Procédé de moulage d'une matière plastique selon la revendication 1, **caractérisé en ce que** la température des moyens de réglage de la température dans la zone radiale externe de la cavité est supérieure à la température dans la zone radiale interne de la cavité dans une moitié du moule et que la température des moyens de réglage de la température dans le rayon externe de la cavité est inférieure à la température dans le rayon interne de la cavité dans l'autre moitié du moule.

3. Procédé de moulage d'une matière plastique selon la revendication 1, **caractérisé en ce que** ladite étape consistant à ajuster la température du matériau en fusion prévoit de refroidir le matériau en fusion par une pluralité de moyens de réglage de la température distincts (16a, 16b et 16c) prévus dans la direction radiale d'une moitié du moule et par la pluralité de moyens de réglage de la température distincts (17a, 17b et 17c) et par des moyens de réglage de la température supplémentaires (19) prévus en direction radiale dans l'autre moitié du moule et **en ce que** la température des moyens de réglage de la température (16a) dans le rayon externe de la cavité est supérieure à la température des moyens de réglage de la température (16b et 16c) dans le rayon interne de la cavité dans l'une des moitiés du moule et que la température des moyens de réglage de la température (17a) dans le rayon externe de la cavité est inférieure à la température des moyens de réglage de la température (17b et 17c) dans le rayon interne de la cavité dans l'autre moitié du moule et que la température des moyens de réglage de la température supplémentaires est également supérieure à la température des moyens de réglage de la température (17a) dans le rayon externe de la cavité dans l'autre moitié du moule.

4. Dispositif destiné au moulage d'un substrat en matière plastique comportant : des éléments de moule (3a, 3b, 5, 7) formant une cavité (15) ; des moyens d'injection (9, 10) destinés à injecter le matériau en fusion dans la cavité (15) ; une pluralité de moyens de réglage de la température distincts ayant différentes températures (16a, 16b, 16c, 17a, 17b, 17c) et destinés à refroidir le matériau injecté, **caractérisé en ce qu'**au moins un élément chauffant électrique supplémentaire (19) est prévu pour chauffer la zone radiale externe de la cavité, notamment l'anneau externe de la matrice.

5. Dispositif destiné au moulage d'une matière plastique selon la revendication 4, **caractérisé en ce que** la température des moyens de réglage de la température (16a) dans le rayon externe de la cavité est supérieure à la température dans le rayon interne de la cavité dans une moitié du moule et que la température des moyens de réglage de la température (17a) dans le rayon externe de la cavité est inférieure à la température dans le rayon interne de la cavité dans l'autre moitié du moule.

6. Dispositif destiné au moulage d'une matière plastique selon la revendication 4, **caractérisé en ce que** les moyens de réglage de la température comportent une pluralité de moyens de réglage de la température distincts (16a, 16b, et 16c) prévus dans la direction radiale de l'une des moitiés du moule et la pluralité de moyens de réglage de la température distincts (17a, 17b et 17c) et des moyens de réglage de la température supplémentaires (19) prévus en direction radiale dans l'autre moitié du moule et **en ce que** la température des moyens de réglage de la température (16a) dans le rayon externe de la cavité est supérieure à la température des moyens de réglage de la température (16b et 16c) dans le rayon interne de la cavité dans l'une des moitiés du moule et que la température des moyens de réglage de la température (17a) dans le rayon externe de la cavité est inférieure à la température des moyens de réglage de la température (17b et 17c) dans le rayon interne de la cavité dans l'autre moitié du moule et que la température des moyens de réglage de la température supplémentaires est également supérieure à la température des moyens de réglage de la température (17a) dans le rayon externe de la cavité dans l'autre moitié du moule.
